# FASCICULE DE BREVET EUROPEEN

(11) **EP 0 952 920 B1**
(45) Date de publication et mention de la délivrance du brevet: **12.05.2004**
(21) Numéro de dépôt: 98955690.7
(22) Date de dépôt: 18.11.1998
(51) Int. Cl.: B32B 15/14, B29C 70/08, B29C 70/78

(54) **PANNEAU EN MATERIAU COMPOSITE A BORDURES PROTEGEES DES CHOCS**
VERBUNDPLATTE MIT STOSSGESCHÜTZTEN KANTEN
COMPOSITE MATERIAL PANEL WITH SHOCK-PROTECTED EDGES

(30) Priorité: 21.11.1997 FR 9714868
(43) Date de publication de la demande: 03.11.1999
(73) Titulaire: AEROSPATIALE Société Nationale Industrielle, 75781 Paris Cédex 16 (FR)
(72) Inventeur: PORTE, Alain, F-31770 Colomiers (FR); ANDRE, Robert, F-31320 Auzeville (FR)
(74) Mandataire: Thébault, Jean-Louis
(86) Numéro de dépôt international: PCT/FR1998/002464
(87) Numéro de publication internationale: WO 1999/026781

(56) Documents cités:
- EP-A- 0 730 951
- GB-A- 1 274 871
- US-A- 4 608 453
- US-A- 5 315 820
- US-A- 5 486 096

## Description

La présente invention a trait à des panneaux en matériau composite, en particulier à matrice thermodurcissable ou thermoplastique, notamment pour carénage, trappes, portes d'accès d'aéronefs et plus précisément à des panneaux à bordures et/ou surface extérieure protégées des chocs ou de l'érosion.

De tels panneaux sont exposés par leur surface extérieure à diverses agressions telles que notamment l'érosion due à l'air, à l'eau, au sable, etc... ou des chocs dus à des manipulations ou au contact d'objets intempestifs tels que des oiseaux, ou à d'autres causes, qui peuvent porter atteinte à l'intégrité du matériau composite et en particulier provoquer une désagrégation des fibres, notamment de carbone, mettant en péril la fiabilité de la structure.

L'invention vise précisément à protéger la face exposée et/ou les bordures de tels panneaux.

Dans le passé, on a déjà cherché à protéger les bordures de structures de carénage particulièrement exposées soit à des phénomènes d'érosion, soit à des chocs, et à cet effet, diverses techniques connues de protection ont été ou peuvent être mises en oeuvre.

Un moyen peut consister à réaliser un collage d'une cornière métallique, en acier inoxydable ou en aluminium par exemple, en forme de U ou de L, rapportée sur la ou les tranches du panneau à protéger.

Cette technique, dans le cas de panneau en matériau composite, est délicate à mettre en oeuvre, surtout sur des pièces en forme, du fait du caractère monolithique de la cornière et de leur nature. La cornière en acier inoxydable présente en effet un état de surface dur et lisse empêchant toute adhésion structurale de la colle, à moins de lui faire subir un traitement chimique très compliqué, cependant que la cornière en aluminium entraîne le risque très important de corrosion, dans le cas de structures composites utilisant des fibres de carbone, du fait de l'existence d'un couple galvanique aluminium-carbone très sensible.

Une autre solution consiste à riveter une cornière en acier inoxydable en forme de U ou de L sur la bordure du panneau, mais elle est compliquée et coûteuse à mettre en oeuvré et demande des précautions pour conserver la métallisation.

Suivant une autre solution décrite dans le document US-5.486.096 visant la protection d'une structure en profil d'aile en matériau composite, le bord d'attaque de la structure est recouvert d'un capot formé d'une grille en acier inoxydable conformé en correspondance avec le bord d'attaque à protéger.

Par ailleurs, dans les documents GB-1.274.871, EP-0.730.951 et US-5.315.820, on décrit des panneaux à structure composite recouverts sur l'une des faces d'un revêtement protecteur incluant un tissu métallique, mais une telle protection ne s'étend pas aux bordures ni à la tranche ni à la face opposée des panneaux.

On peut également recouvrir la bordure d'un panneau en matériau composite avec de la peinture anti-érosion, mais cette solution, fragile, présente une durabilité faible dans le temps et nécessite un remplacement de la protection au cours de la durée de service de la structure. De plus, elle protège de manière insuffisante la bordure en particulier en cas de chocs durant les manipulations du panneau, dans le cas de. panneau de portes et capots, pendant les cycles d'ouverture/fermeture.

En outre, une telle peinture s'adapte mal aux angles vifs et l'on constate souvent, à la suite du retrait de la peinture au séchage, une mise à nu de l'arête des angles.

Enfin, l'application de la peinture est délicate et les temps de séchage sont trop longs, de l'ordre d'une semaine pour un séchage total.

Une bande de polyuréthanne peut également être envisagée pour le recouvrement des bordures de panneau, mais ce matériau présente une trop grande sensibilité aux liquides aéronautiques.

Le recouvrement de telles bordures peut enfin s'effectuer par pulvérisation d'une couche de vernis, mais cette solution est fragile et n'est pas adaptée aux pièces à manipulation fréquente telles que des capots de moteurs.

La présente invention vise à pallier les divers inconvénients de telles solutions en proposant d'autres moyens, aptes à assurer une protection efficace, durable et facile à mettre en oeuvre.

A cet effet, l'invention a pour objet un panneau en matériau composite, en particulier à matrice thermodurcissable ou thermoplastique, à bordures et/ou surface extérieure protégées des chocs ou de l'érosion, pour tout élément de carénage de cellules ou de nacelles de moteurs d'aéronefs, caractérisé en ce qu'il comporte, sur tout ou partie de ses bordures, un revêtement qui forme une bordure chevauchant les deux faces opposées du panneau, constitué d'un tissu métallique lié à la structure du panneau par l'intermédiaire d'un agent d'adhésion diffusé au travers dudit tissu.

Suivant un mode de réalisation, ledit revêtement recouvre toute la surface extérieure du panneau, ainsi que la tranche et se prolonge en bordure sur la face intérieure dudit panneau.

Dans la structure selon l'invention, l'adhérence du tissu métallique à la structure du panneau, constituée de fibres minérales, notamment des plis de carbone, noyées dans une matrice d'une résine appropriée, est réalisée par la résine d'imprégnation des fibres ou par un adhésif ou une colle approprié, rapporté, l'agent d'adhésion étant diffusé au travers du tissu.

Le tissu métallique est par exemple constitué d'une structure monocouche de fils monofilaments tissés en acier inoxydable.

De tels panneaux sont remarquables en ce qu'ils présentent une parfaite intégration de la protection à la structure des panneaux grâce à la liaison homogène entre le tissu métallique protecteur et le matériau composite, procurée par la diffusion intime au travers de la structure tissée de l'agent d'adhésion, à savoir la résine d'imprégnation des fibres du composite et/ou l'adhésif ou colle éventuellement rapporté.

Le collage de la protection est donc excellent et la nature de la protection, un tissu métallique parfaitement plaqué contre le composite, assure une excellente résistance à l'érosion et aux chocs.

L'invention a également pour objet diverses méthodes de fabrication de tels panneaux, qui vont maintenant être décrites en détail en référence aux dessins annexés, sur lesquels :
- Figure 1 est une vue schématique en coupe partielle d'un panneau en matériau composite muni d'une bordure selon l'invention ;
- Figure 2 est une vue schématique en coupe partielle d'un panneau en matériau composite dont la surface extérieure et la bordure sont protégés conformément à l'invention ;
- Figure 3 est une vue schématique en coupe partielle d'un panneau du type de la figure 1, en fabrication selon la technique de co-cuisson ;
- Figure 4 est une vue schématique en coupe partielle d'un panneau du type de la figure 2, en fabrication selon la technique de co-cuisson ;
- Figures 5a et 5b illustrent deux phases d'une fabrication selon la technique de cuisson mixte d'un panneau à protection en bordure et sur la face extérieure ;
- Figure 6 est une vue de profil de capots de fan de turboréacteur à bordures protégées conformément à l'invention, et
- Figure 7 est une vue similaire à la figure 6 de capots protégés à la fois en bordure et en face extérieure.

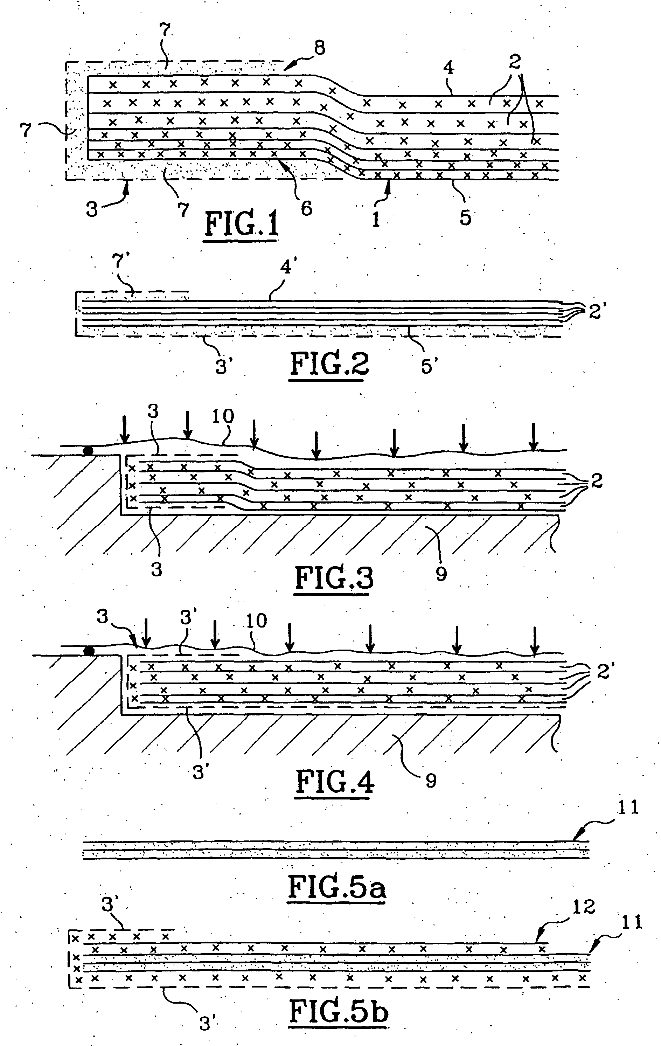

Sur la figure 1, on a représenté en 1 une structure en matériau composite d'un panneau constituant un élément de carénage de la cellule ou de nacelles de moteurs d'aéronefs, tel qu'un capot de fan par exemple.

La structure 1 comprend un certain nombre de plis de carbone 2 superposés, constitués chacun par exemple d'un tissu de fibres de carbone pré-imprégnées.

Conformément à l'invention, la structure 1 est protégée en bordure par un revêtement constitué d'un tissu métallique 3 recouvrant à la fois la tranche de la structure et une partie des deux faces opposées, intérieure 4 et extérieure 5, du panneau.

La face extérieure 5 est celle exposée aux agressions (érosion, chocs, etc...) dont le panneau doit être préservé.

A cet effet, afin que le tissu protecteur 3 affleure sur la face exposée la partie de surface non protégée, il est ménagé à la fabrication, à hauteur de la zone de bordure à protéger, un retrait (6) des plis 2 correspondant à l'épaisseur du tissu 3 et d'un éventuel adhésif ou colle rapporté, comme symbolisé en 7 sur la figure 1.

Sur la face intérieure 4 du panneau, se retrouve, en regard du retrait 6, un rehaussement correspondant 8.

Le tissu protecteur 3 recouvre précisément les parties 6 et 8.

Le tissu 3 est par exemple une structure tissée monocouche de fils monofilaments en acier inoxydable ou en titane.

Les caractéristiques de tissage, notamment diamètre des fils, écartement entre fils, matériau des fils, sont déterminées en fonction de la nature du panneau et de la résistance à l'érosion et aux chocs désirée.

L'adhésif ou colle 7, lorsqu'il est prévu, est approprié à la nature du tissu 3 et à celle du matériau composite. Il assure seul et éventuellement conjointement avec la résine d'imprégnation des fibres des plis 2, l'adhérence du tissu 3 à la structure 1. La structure poreuse du tissu 3 contribue à une bonne diffusion de l'agent d'adhérence intimement et de façon homogène dans le tissu 3, assurant ainsi une parfaite intégration de la protection au panneau.

La figure 2 représente un panneau formé également de plis de carbone 2', revêtu sur sa face extérieure 5' d'un tissu métallique 3', analogue à celui de la figure 1, recouvrant également la bordure du panneau par repliage contre une partie de la face intérieure 4'.

Il n'est pas nécessaire dans ce cas de ménager en bordure du panneau un retrait sur la face extérieure 5' puisque la totalité de cette face est recouverte par le tissu 3'.

Comme pour le panneau de la figure 1, l'adhésion entre tissu 3' et structure composite 2' est assurée, soit par la résine d'imprégnation des fibres de carbone, soit par un adhésif ou colle 7', seul ou en association avec ladite résine, l'adhésif étant rapporté.

Les fibres du matériau composite peuvent bien entendu être de toute nature habituellement utilisée pour la réalisation de panneaux du type visé par la présente invention.

Divers modes de fabrication peuvent être, conformément à l'invention, mis en oeuvre pour la réalisation des panneaux ci-dessus.

On va maintenant décrire un mode , dit de co-cuisson, appliqué à un panneau selon la figure 1 et illustré par la figure 3.

Dans un moule 9 à fond plat, on drape un certain nombre de plis 2 de fibres de carbone pré-imprégnées, la face de l'empilage tournée vers le fond du moule correspondant à la face extérieure du panneau.

Dans le même temps, on place en bordure un tissu métallique 3.

Le moule 9 est ensuite recouvert d'un film protecteur 10 fixé de manière étanche sur le pourtour du moule.

L'ensemble est placé en autoclave et soumis à une pression et à une température déterminées, pendant un temps déterminé, pour à la manière connue durcir ou cuire la résine d'imprégnation.

On réalise ainsi l'intégration directe du tissu 3 au matériau composite par la réalisation en une seule opération d'une matrice liant à la fois les fibres des plis 2 et le tissu métallique 3.

Au lieu d'un film 10 et d'une pression extérieure, on peut bien entendu utiliser une vessie reliée à une source de vide, l'ensemble étant placé dans un four.

Si un adhésif ou colle tel que 7 est rapporté entre le tissu 3 et les plis 2, la liaison entre le tissu et le matériau composite sera assurée, comme indiqué plus haut, par ledit adhésif, éventuellement associé à la résine d'imprégnation.

Cet adhésif peut être rapporté au cours d'une seconde phase, la première consistant à placer dans le moule 9 les plis 2 avec une cale à l'emplacement de la future bordure et à effectuer une première cuisson. Le panneau moulé peut être ainsi sorti du moule et détouré de manière précise. Il est ensuite replacé dans le moule en même temps que le tissu métallique 3 et avec interposition de l'adhésif 7.

On effectue ensuite, à la manière connue, le collage entre le tissu 3 et le panneau.

Cette manière de faire a l'avantage d'une meilleure précision dimensionnelle du panneau que dans le cas d'une co-cuisson où peuvent apparaître des problèmes de bordures après polymérisation (bordures ayant bavé) et où il est souvent difficile de polymériser à côte juste, à cause d'amas de résine et de malformation des angles.

Il est à noter que le tissu métallique 3 présente une grande souplesse lui permettant d'épouser au mieux des surfaces à courbures ou à angulation.

La figure 4 illustre la fabrication d'un panneau du type de la figure 2 selon la même technique que la figure 3. Les modes opératoires indiqués ci-dessus à propos de la figure 3 s'appliquent de la même manière au cas de la figure 4.

Les figures 5a et 5b illustrent une méthode de fabrication d'un panneau mettant en oeuvre une cuisson mixte et plus précisément une cuisson multiphase, également appelée multicuisson.

Elle consiste à fabriquer d'abord la surface extérieure d'un panneau à partir (figure 5a) d'un ou plusieurs plis par exemple de carbone 11 polymérisés en une première cuisson, puis à intégrer un tissu métallique 3' en co-cuisson avec d'autres plis de carbone 12 (figure 5b), en cours d'une seconde cuisson.

Le collage du tissu 3' qui recouvre toute la face extérieure, est assuré au cours de la seconde cuisson, grâce à la résine d'imprégnation des fibres des plis 11 et 12 et/ou à de l'adhésif ou de la colle, tel que 7 ou 7' rapporté aux endroits désirés.

Cette technique est également applicable dans le cas d'une protection de bordure seulement.

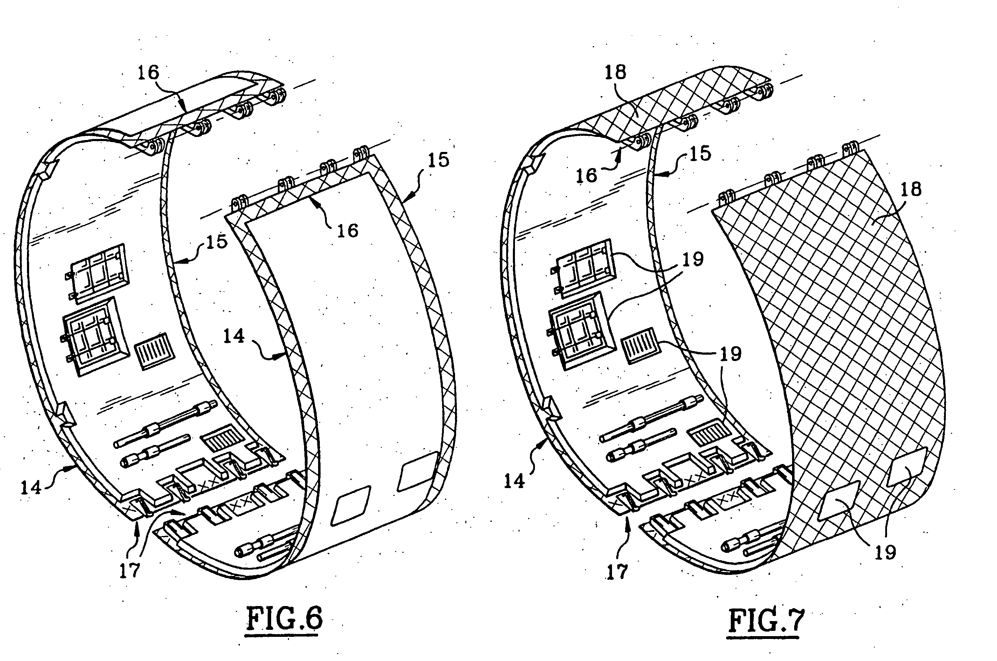

Les figures 6 et 7 illustrent la réalisation de capots de fan à l'aide de panneaux protégés selon l'invention, respectivement sur les bordures simplement (figure 6) et sur à la fois les bordures et la face extérieure.

Toutes les bordures sont concernées, à savoir les bordures avant 14 et arrière 15 et les bordures supérieures 16 et inférieures 17.

Les faces extérieures 18 (figure 7) concernent la totalité des panneaux excepté divers emplacements 19 de portes d'accès, grilles de ventilation, etc...

La solution ainsi apportée par l'invention à la protection des panneaux en matériau composite exposés à des frictions aérodynamiques et/ou à des chocs, assure une parfaite intégration de la protection aux panneaux.

Les propriétés de souplesse de la structure tissée de protection (3, 3'), avant imprégnation par l'agent de liaison, lui permettent d'épouser parfaitement les formes aérodynamiques du panneau (pas de plissage).

Le caractère poreux de la structure tissée permet une imprégnation intime de l'agent de liaison et donc un collage parfait.

Les panneaux ainsi réalisés présentent d'excellentes qualités de surface tant en ce qui concerne la tenue dans le temps que la résistance aux chocs et à l'effritement ou encore l'état de surface.

La technique de l'invention est par ailleurs facile à mettre en oeuvre, la structure tissée métallique se prêtant aisément au drapage couramment utilisé en particulier pour la fabrication de panneaux composites.

Il est également à noter que l'emploi d'une structure de protection métallique confère au panneau une parfaite protection contre la foudre et offre une continuité de métallisation entre les bordures et leurs appuis, de nature métallique.

La solution de protection offerte par l'invention peut aussi être appliquée à des panneaux existants ou utilisée pour réparer de tels panneaux.

Il faut enfin noter que la structure tissée métallique 3,3', aussi bien dans le cas d'une bordure (figure 1) que d'une protection sur toute la surface extérieure (figure 2), peut ne pas comporter de retour sur la face interne du panneau, la protection sur le pourtour du panneau ne s'étendant que sur la tranche.

Bien entendu, l'invention n'est pas limitée aux modes de réalisation représentés et décrits ci-dessus, mais en couvre au contraire toute les variantes, tant en ce qui concerne la protection elle-même (nature de la structure tissée, caractéristiques physiques, nature de l'agent d'adhésion au matériau composite du panneau), qu'en ce qui concerne la nature dudit matériau composite (fibres pré-imprégnées tissées ou non tissées, fibres bobinées, nature de la fibre et de la résine d'imprégnation thermodurcissable ou thermoplastique).

C'est ainsi que suivant une variante de réalisation d'un panneau selon l'invention dont le support composite du revêtement protecteur est constitué d'une tôle thermoplastique, on forme en premier lieu la tôle thermoplastique, que l'on détoure ensuite aux côtes désirées. Ensuite, on place ledit revêtement de tissu protecteur aux endroits désirés (face extérieure et/ou bordures), avec interposition éventuelle d'un adhésif ou colle approprié et, enfin, on effectue le collage par cuisson dudit tissu métallique avec ledit panneau détouré.

## Revendications

1. Panneau en matériau composite, en particulier à matrice thermodurcissable ou thermoplastique, à bordures et/ou surface extérieure protégées des chocs ou de l'érosion, pour tout élément de carénage de cellules ou de nacelles de moteurs d'aéronefs, **caractérisé en ce qu'**il comporte, sur tout ou partie de ses bordures (6, 8), un revêtement qui forme une bordure chevauchant les deux faces opposées (4, 5) du panneau, constitué d'un tissu métallique (3, 3') lié à la structure (2, 2') du panneau par l'intermédiaire d'un agent d'adhésion diffusé au travers dudit tissu.

2. Panneau suivant la revendication 1, **caractérisé en ce que** ledit revêtement (3') recouvre toute la surface extérieure (5') du panneau, ainsi que la tranche et se prolonge en bordure sur la face intérieure (4') dudit panneau.

3. Panneau suivant la revendication 1 ou 2, **caractérisé en ce que** ledit revêtement ne s'étend pas sur la face interne (4, 4') du panneau.

4. Panneau suivant l'une des revendications 1 à 3, **caractérisé en ce que** le tissu métallique est formé de fils d'acier inoxydable ou de titane.

5. Panneau suivant l'une des revendications 1 à 4, **caractérisé en ce que** ledit agent d'adhésion est constitué par la résine d'imprégnation des fibres dudit matériau composite.

6. Panneau suivant l'une des revendications 1 à 4, **caractérisé en ce que** ledit agent d'adhésion est constitué par un.adhésif ou colle (7, 7') approprié, rapporté.

7. Panneau suivant l'une des revendications 1 à 6, **caractérisé en ce que** le support composite dudit revêtement est constitué d'une tôle thermoplastique.

8. Procédé de fabrication d'un panneau selon l'une des revendications 1 à 6, **caractérisé en ce qu'**il consiste à placer dans un moule (9) au moins un pli (2, 2') de tissu de fibres pré-imprégnées, ainsi que ledit revêtement (3, 3') de tissu métallique aux endroits appropriés et à réaliser la liaison de l'ensemble par co-cuisson.

9. Procédé suivant la revendication 8, **caractérisé en ce qu'**un adhésif ou colle approprié (7, 7') est interposé entre le ou les plis de tissu de fibres et le tissu métallique (3, 3') avant co-cuisson.

10. Procédé de fabrication d'un panneau selon l'une des revendications 1 à 6, **caractérisé en ce qu'**il consiste à placer dans un moule au moins un pli de tissu de fibres pré-imprégnées, à effectuer une première cuisson, puis à détourer le panneau moulé aux côtes désirées, à replacer dans ledit moule ledit panneau, ainsi que ledit revêtement de tissu métallique aux endroits désirés, avec interposition d'un adhésif ou colle approprié et enfin à effectuer le collage par cuisson dudit tissu métallique avec ledit panneau détouré.

11. Procédé de fabrication d'un panneau selon l'une quelconque des revendications 1 à 6, **caractérisé en ce qu'**il consisté à réaliser au cours d'une première cuisson la face extérieure (11) du panneau, puis à assurer au cours d'une seconde cuisson le collage d'un revêtement de tissu métallique (3') mis en place aux endroits désirés, conjointement à l'adjonction à ladite face extérieure (11) d'une couche de même nature constituant la face interne (12) du panneau.

12. Procédé de fabrication d'un panneau selon la revendication 7, **caractérisé en ce qu'**il consiste à former une tôle thermoplastique, puis à la détourer aux côtes désirées, à placer ledit revêtement de tissu métallique aux endroits désirés, avec interposition éventuelle d'un adhésif ou colle approprié, et, enfin, à effectuer le collage par cuisson dudit tissu métallique avec ledit panneau détouré.

## Patentansprüche

1. Platte aus Verbundmaterial, insbesondere mit wärmeaushärtbarer oder thermoplastischer Grundmasse, mit Rändern und/oder einer äußeren Oberfläche, die vor Stößen oder vor Erosion geschützt sind, für jegliches Verkleidungselement von Flugzeugzellen oder Flugzeugtriebwerksrümpfe, **dadurch gekennzeichnet, dass** sie auf allen Rändern (6, 8) oder auf einem Teil hiervon einen Überzug aufweist, der einen Rand bildet, der die beiden gegenüberliegenden Flächen (4, 5) der Platte umgreift und aus einem Metallgewebe (3, 3') gebildet ist, das mit der Struktur (2, 2') der Platte über ein über das Gewebe verteiltes Haftmittel verbunden ist.

2. Platte nach Anspruch 1, **dadurch gekennzeichnet, dass** der Überzug (3') die gesamte äußere Oberfläche (5') der Platte sowie die Schnittfläche abdeckt und als Rand auf der inneren Fläche (4') der Platte verlängert ist.

3. Platte nach Anspruch 1 oder 2, **dadurch gekennzeichnet, dass** sich der Überzug nicht auf der inneren Fläche (4, 4') der Platte erstreckt.

4. Platte nach einem der Ansprüche 1 bis 3, **dadurch gekennzeichnet, dass** das Metallgewebe aus Fäden aus rostfreiem Stahl oder aus Titan gebildet ist.

5. Platte nach einem der Ansprüche 1 bis 4, **dadurch gekennzeichnet, dass** das Haftmittel durch ein Imprägnierharz der Fasern des Verbundmaterials gebildet ist.

6. Platte nach einem der Ansprüche 1 bis 4, **dadurch gekennzeichnet, dass** das Haftmittel durch einen aufgetragenen geeigneten Klebstoff oder Leim (7, 7') gebildet ist.

7. Platte nach einem der Ansprüche 1 bis 6, **dadurch gekennzeichnet, dass** der Verbundträger des Überzugs aus einem thermoplastischen Blech gebildet ist.

8. Verfahren zum Herstellen einer Platte nach einem der Ansprüche 1 bis 6, **dadurch gekennzeichnet, dass** es darin besteht, in einer Form (9) wenigstens eine Lage (2, 2') eines Gewebes aus vorimprägnierten Fasern sowie den Überzug (3, 3') aus Metallgewebe an geeigneten Stellen anzuordnen und die Verbindung der Gesamtheit durch Zusammenbrennen zu verwirklichen.

9. Verfahren nach Anspruch 8, **dadurch gekennzeichnet, dass** zwischen die Fasergewebelage(n) und das Metallgewebe (3, 3') vor dem Zusammenbrennen ein geeigneter Klebstoff oder Leim (7, 7') eingefügt wird.

10. Verfahren zum Herstellen einer Platte nach einem der Ansprüche 1 bis 6, **dadurch gekennzeichnet, dass** es darin besteht, in einer Form wenigstens eine Gewebelage aus vorimprägnierten Fasern anzuordnen, ein erstes Brennen vorzunehmen, dann die geformte Platte an gewünschten Seiten auszuschneiden, die Platte sowie den Überzug aus Metallgewebe an den gewünschten Stellen wieder in die Form zu legen und dabei dazwischen einen geeigneten Klebstoff oder Leim einzubringen und schließlich das Verkleben mit der ausgeschnittenen Platte durch Brennen des Metallgewebes vorzunehmen.

11. Verfahren zur Herstellung einer Platte nach einem der Ansprüche 1 bis 6, **dadurch gekennzeichnet, dass** es darin besteht, während eines ersten Brennens die äußere Fläche (11) der Platte herzustellen und dann während eines zweiten Brennens sowohl das Verkleben eines Überzugs (3') aus Metallgewebe, der an gewünschten Stellen angeordnet worden ist, als auch die Befestigung an der äußeren Fläche (11) einer Schicht derselben Art, die die innere Fläche (12) der Platte bildet, sicherzustellen.

12. Verfahren zur Herstellung einer Platte nach Anspruch 7, **dadurch gekennzeichnet, dass** es darin besteht, ein thermoplastisches Blech zu bilden, dann dieses an den gewünschten Seiten auszuschneiden, den Überzug aus Metallgewebe an den gewünschten Stellen anzuordnen, wobei eventuell dazwischen ein geeigneter Klebstoff oder Leim eingefügt wird, und schließlich das Verkleben durch Brennen des Metallgewebes mit der ausgeschnittenen Platte vorzunehmen.

## Claims

1. A panel made from composite material, in particular with a thermosetting or thermoplastic matrix, with borders and/or an external surface protected from impact or erosion, for any fairing component of aircraft engine cells or nacelles, **characterised in that** it comprises, on all or part of its borders (6, 8), a cladding which forms a border straddling the two opposite faces (4, 5) of the panel, formed by a metallic fabric (3, 3') connected to the structure (2, 2') of the panel by means of an adhesion agent diffused through said fabric.

2. A panel according to claim 1, **characterised in that** said cladding (3') covers the entire external surface (5') of the panel, as well as the edge as extended at the border on the internal face (4') of said panel.

3. A panel according to claim 1 or 2, **characterised in that** said cladding does not extend over the internal face (4, 4') of the panel.

4. A panel according to one of claims 1 to 3, **characterised in that** the metallic fabric is formed from stainless-steel or titanium threads.

5. A panel according to one of claims 1 to 4, **characterised in that** said adhesion agent is formed by the impregnation resin of the fibres of said composite material.

6. A panel according to one of claims 1 to 4, **characterised in that** said adhesion agent is formed by an appropriate attached adhesive or glue (7, 7').

7. A panel according to one of claims 1 to 6, **characterised in that** the composite support of said cladding is formed by a thermoplastic sheet.

8. A method of manufacturing a panel according to one of claims 1 to 6, **characterised in that** it comprises placing in a mould (9) at least one ply (2, 2') of fabric of preimpregnated fibres, as well as said cladding (3, 3') of metallic fabric at the appropriate points and effecting the connection of the whole by co-curing.

9. A method according to claim 8, **characterised in that** an appropriate adhesive or glue (7, 7') is interposed between the ply or plies of fabric of fibres and the metallic fabric (3, 3') before co-curing.

10. A method of manufacturing a panel according to one of claims 1 to 6, **characterised in that** it comprises placing in a mould at least one ply of fabric of preimpregnated fibres, effecting a first curing, then cutting out the moulded panel to the required dimensions, replacing said panel in said mould, as well as said cladding of metallic fabric at the required points, with the interposing of an appropriate adhesive or glue, and finally effecting the adhesion by curing of said metallic fabric with said cut panel.

11. A method of manufacturing a panel according to any one of claims 1 to 6, **characterised in that** it comprises producing, during a first curing, the external face (11) of the panel, and then providing, during a second curing, the adhesion of a cladding of metallic fabric (3') put in place at the required points, conjointly with the addition to said external face (11) of a layer of the same nature constituting the internal face (12) of the panel.

12. A method of manufacturing a panel according to claim 7, **characterised in that** it comprises forming a thermoplastic sheet, and then cutting to the required dimensions, placing said cladding of metallic cloth at the required points, with the possible interposing of an appropriate adhesive or glue, and finally effecting the adhesion by curing of said metallic fabric with said cut panel.
